# EUROPÄISCHE PATENTSCHRIFT

(11) **EP 0 698 755 B1**
(45) Veröffentlichungstag und Bekanntmachung des Hinweises auf die Patenterteilung: **30.01.2002**
(21) Anmeldenummer: 95111959.3
(22) Anmeldetag: 29.07.1995
(51) Int. Cl.: F16H 63/42, B23Q 3/00

(54) **Nachtbeleuchtung für eine Getriebeschaltung eines Kraftfahrzeuges mit Getriebeautomatik**
Night illumination for gear shift control of a vehicle with automatic transmission
Eclairage de nuit pour la commande de changement de vitesse d'un véhicule avec transmission automatique

(30) Priorität: 24.08.1994 DE 4429972
(43) Veröffentlichungstag der Anmeldung: 28.02.1996
(73) Patentinhaber: ZF Lemförder Metallwaren AG, 49448 Lemförde (DE)
(72) Erfinder: Ersoy, Metin, Dr. Ing., D-65396 Walluf (DE)

(56) Entgegenhaltungen:
- DE-C- 4 228 982
- US-A- 3 929 092
- US-A- 4 425 604
- US-A- 4 565 151
- US-A- 4 811 179
- US-A- 4 991 535
- US-A- 5 070 808

## Beschreibung

Die Erfindung bezieht sich auf eine Nachtbeleuchtung für die Getriebeschaltung eines Kraftfahrzeuges mit Merkmalen nach dem Oberbegriff des Patentanspruches 1.

Eine Nachtbeleuchtung dieser Art ist durch den Einbau in Fahrzeuge verschiedener Hersteller, zum Beispiel der Firma Saab AB in Trollhätten, Schweden, bekannt. In der mit unterschiedlichen Raumformen ausgebildeten Lichtkammer befindet sich bei den bekannten Anordnungen eine oder befinden sich zwei schaltbare Glühlampen, so daß das der jeweiligen Schaltstellung zugeordnete Symbol der Skala durch das Fenster in dem flexiblen Band von unten beleuchtet wird. Dabei ist die Beleuchtung in den verschiedenen Schaltstellungen unterschiedlich hell, und es treten Lichtstrahlen durch Spalte aus, die für das Wählhebelbewegungsspiel erforderlich sind.

Aus der US 4,425,604 ist insbesondere aus der Figur 1 eine Hintergrundbeleuchtung für eine Flüssigkristallanzeige bekannt. Dabei wurde es als nachteilig angesehen, daß die Beleuchtung mittels eines parabolischen Reflektors die Erkennbarkeit der Zeichen der Flüssigkristallanzeige verschlechtert, weil infolge der verstärkten Ausleuchtung die Symbole zum Teil durchleuchtet werden. Aus diesem Grund wird in der Schrift ein Reflektor eingesetzt, der eine Oberfläche aufweist, die aus mehreren aneinander gereihten, sphärischen Teilbereichen besteht und somit in Zusammenwirkung mit einer zwischen Reflektor und Flüssigkristallanzeige angeordneten Lichtquelle eine diffuse Beleuchtung erzeugt. Dadurch wird eine diffuse Lichtstreuung geschaffen.

Der Erfindung liegt die Aufgabe zugrunde, eine vereinfachte Nachtbeleuchtung zu schaffen, deren mit den Schaltstellungen zugeordneten Symbolen versehene Skala gleichmäßig hell ausgeleuchtet ist und die unerwünschte Lichtaustritte an anderen Stellen der Getriebeschaltung vermeidet.

Zur Lösung dieser Aufgabe wird nach der Erfindung eine Ausbildung unter Verwendung der Merkmale nach dem Kennzeichen des Patentanspruches 1 vorgeschlagen.

Durch die Parabolform der den zu beleuchtenden Symbolen gegenüberliegenden Wand der Lichtkammer werden alle Symbole mit senkrechten Lichtstrahlen beleuchtet. Da die Länge der Lichtstrahlen gleich ist, erfolgt auch eine gleichmäßige und gegenüber bekannten Anordnungen intensivere Beleuchtung.
Zur Vermeidung unerwünschter Lichtaustritte durch das für die Bewegung des Wählhebels notwendige Spiel ist neben der Lichtkammer mit einem seitlichen Abstand vom beweglichen Wählhebel eine Dunkelkammer angeordnet, die das flexible Band ebenfalls an der Oberseite abdeckt und als Abschirmkammer wirksam ist.

Die Lichtkammer wird vorzugsweise sehr schmal ausgebildet, so daß sie lediglich die Breite der Skala mit den Schaltstellungssymbolen aufweist.

Vorteilhaft ist eine Verspiegelung der Oberfläche der parabolischen Innenwand der Lichtkammer. Geeignet sind stark lichtreflektierende Beschichtungen oder gegebenenfalls auch eine polierte Wandoberfläche.

Auf dem flexiblen Band über der Dunkelkammer kann zusätzlich eine auf die Schaltstellung hinweisende, für den Fahrzeuglenker sichtbare Markierung, zum Beispiel ein Symbol aus einem Pfeil, angeordnet sein.

Ein Ausführungsbeispiel der Erfindungsmerkmale ist in der Zeichnung teils schematisch dargestellt. Es zeigen:

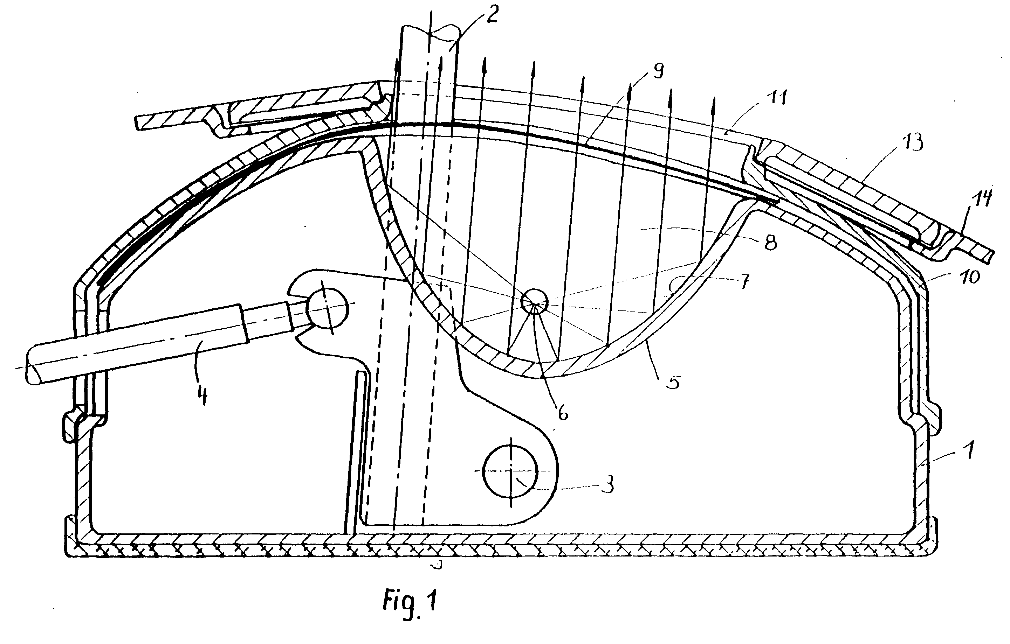

- Figur 1: einen parallel zur Fahrtrichtung des Fahrzeuges gelegten senkrechten Schnitt durch das Wählhebelgehäuse mit der Lichtkammer,

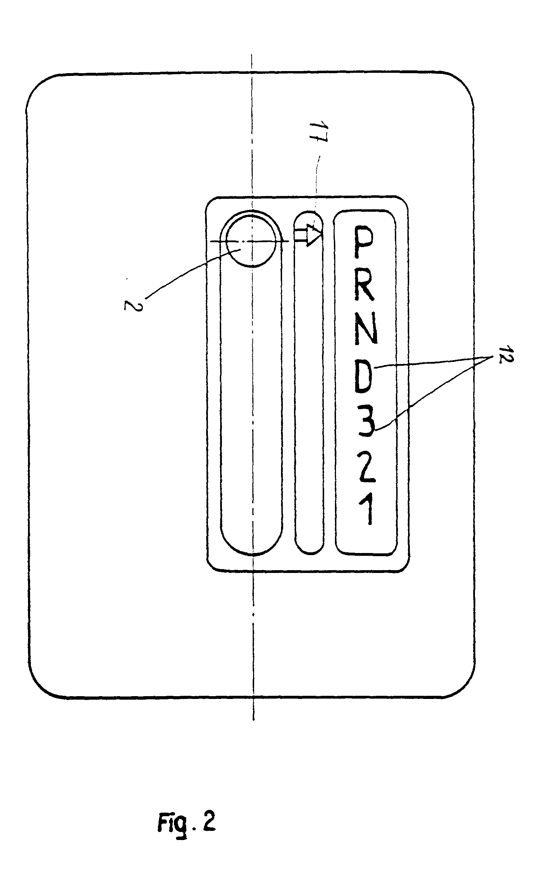

- Figur 2: eine Draufsicht auf das Wählhebelgehäuse und

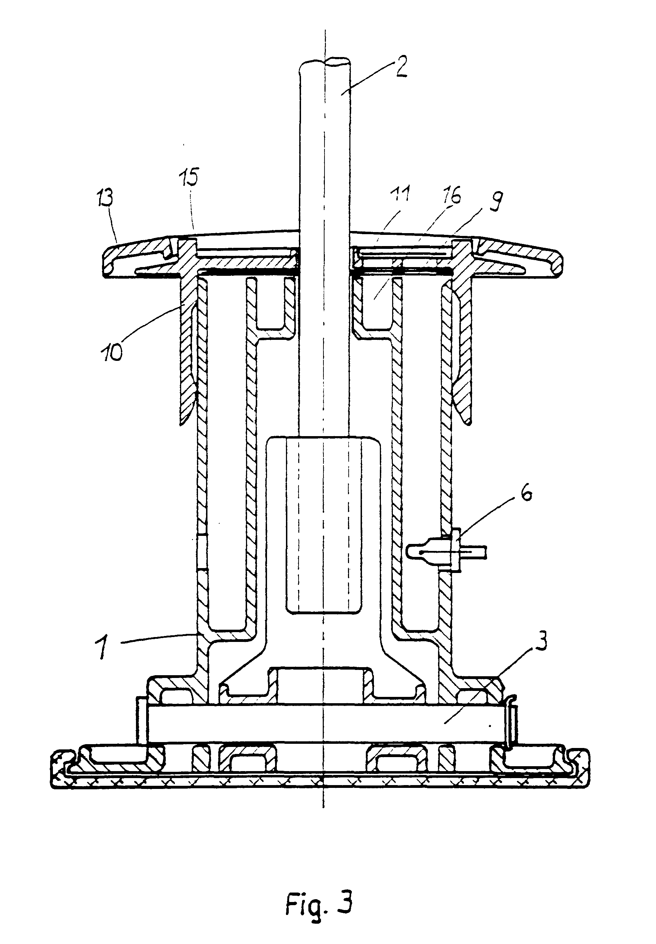

- Figur 3: einen vertikalen Schnitt durch die Lichtkammer.

In dem Wählhebelgehäuse 1 ist der Wählhebel 2 für die automatische Getriebeschaltung um eine Schwenkachse 3 beweglich gelagert. Durch ein Gestänge 4, einen Seilzug oder dergleichen, ist der Wählhebel 2 mit den Stellgliedern im Kraftfahrzeuggetriebe verbunden. An der Oberseite des Gehäuses 1 ist eine Lichtkammer 8 ausgebildet, die parallel zur Fahrzeuglängsrichtung ausgerichtete ebene Seitenwände und dazwischen eine Begrenzungswand 5 mit einem in Richtung der Wählhebelbewegung parabolischen Querschnitt aufweist. Im Brennpunkt dieser parabolischen Begrenzungswand 5 ist eine schaltbare Lichtquelle 6, zum Beispiel eine Glühlampe, angeordnet. Die innere Oberfläche 7 der parabolischen Begrenzungswand 5 ist mit einem Licht gut reflektierenden Belag versehen oder in anderer Weise verspiegelt. Die oben offene Seite der Lichtkammer 8 wird durch ein flexibles Band 9, eine Folie oder dergleichen, abgedeckt, die am Wählhebel 2 befestigt ist und mit ihren Enden zwischen dem Gehäuse 1 und einer dieses von oben abdeckenden Haube 10 in an sich bekannter Weise beweglich geführt ist, so daß dieses flexible Band 9 sich mit dem Wählhebel 2 verstellt. Ein Skaleneinsatz 11 mit lichtdurchlässig oder durchscheinend ausgebildeten Symbolen 12 fur die jeweils gewählte Schaltstellung ist mit einem Einsatz 13 in eine Abdeckhaube 14 eingesetzt, die im Fahrgastraum karosseriefest angeordnet ist. Unter den Symbolen 12 der Skala 11 ist in dem flexiblen Band 9 wenigstens ein Fenster 15 angeordnet, welches sich in den einzelnen Schaltstellungen jeweils unter einem der Schaltstellung entsprechenden Symbol 12 befindet, so daß Licht aus der Lichtkammer 8 durch das Fenster 15 das Symbol 12 beleuchtet. In an sich bekannter Weise können auch die übrigen Schaltstellungen durch kleinere Fenster oder dergleichen in dem flexiblen Band 9 markiert werden. Neben der Lichtkammer 8 ist zwischen dieser und dem Schalthebel 2 eine als Abschirmkammer 16 wirksame Dunkelkammer vorgesehen, welche eventuell durch den Spalt zwischen dem flexiblen Band 9 und der Gehäusewandung zwischen der Lichtkammer 8 und der Abschirmkammer 16 abschirmt und verhindert, daß unerwünscht Licht in dem Spalt zwischen dem in einem Langschlitz beweglichen Wählhebel 2 und dem flexiblen Band 9 sichtbar ist. Auf dem flexiblen Band 9 über der Abschirmkammer 16 ist eine auf die Schaltstellung hinweisende und für den Fahrzeuglenker auch bei Tageslicht sichtbare Markierung, zum Beispiel ein Pfeilsymbol 17, zusätzlich angeordnet.

### BEZUGSZEICHENLISTE:

- 1: Gehäuse
- 2: Wählhebel
- 3: Schwenkachse
- 4: Gestänge (Seilzug)
- 5: Begrenzungswand
- 6: Brennpunkt
- 7: Oberfläche
- 8: Lichtkammer
- 9: flexibles Band
- 10: Haube
- 11: Skala
- 12: Symbol
- 13: Einsatz
- 14: Abdeckung
- 15: Fenster
- 16: Abschirmkammer
- 17: Markierung

## Patentansprüche

1. Nachtbeleuchtung für eine Getriebeschaltung eines Kraftfahrzeuges mit einer Getriebeautomatik, bei der unter einer Skala (11) mit lichtdurchlässigen Schaltstellungssymbolen eine beleuchtbare, durch ein mit einem Wählhebel (2) verbundenes flexibles Band (9) abgedeckte Lichtkammer (8) vorgesehen ist und das flexible Band (9) ein lichtdurchlässiges, in den Schaltstellungen jeweils unter dem zugehörigen Schaltstellungssymbol befindliches Fenster (15) aufweist, **dadurch gekennzeichnet, daß** die Lichtkammer (8) in Richtung der Wählhebelbewegung einen parabolischen Querschnitt, eine lichtreflektierende Oberfläche (7) der parabolischen Kammerwand und eine im Brennpunkt (6) der Parabel angeordnete Lichtquelle aufweist und zwischen der Lichtkammer (8) und dem mit einem seitlichen Abstand daneben beweglichen Wählhebel (2) eine Abschirmkammer (16) angeordnet ist, deren Oberseite ebenfalls durch das flexible Band (9) abgedeckt ist.

2. Nachtbeleuchtung nach Anspruch 1, **dadurch gekennzeichnet, daß** die Lichtkammer (8) schmal, lediglich in der Breite der Skala (11) mit den Schaltstellungssymbolen (12), ausgebildet ist.

3. Nachtbeleuchtung nach den Ansprüchen 1 und 2, **dadurch gekennzeichnet, daß** die Oberfläche der parabolischen Begrenzungswand (5) der Lichtkammer (8) verspiegelt ist.

4. Nachtbeleuchtung nach einem der vorstehend genannten Ansprüche, **dadurch gekennzeichnet, daß** auf dem flexiblen Band (9) über der Abschirmkammer (16) eine auf die Schaltstellung hinweisende, für den Fahrzeuglenker sichtbare Markierung (17), zum Beispiel ein Pfeilsymbol, angeordnet ist.

## Claims

1. Night illumination for a gear shifting system of a motor vehicle with an automatic transmission, in which a light chamber (8) is provided under a scale (11) with transparent shift position symbols, which chamber can be illuminated and is covered by a flexible band (9) connected to a selector lever (2), and the flexible band (9) has a transparent window (15), which is located under the associated shift position symbol in the shift positions, **characterised in that** the light chamber (8) has a parabolic cross section in the direction of the selector lever movement, a light-reflecting surface (7) of the parabolic chamber wall and a light source disposed at the focus (6) of the parabola, and a screening chamber (16) is disposed between the light chamber (8) and the selector lever (2), which can move next to the screening chamber at a lateral spacing, the top side of which screening chamber is also covered by the flexible band (9).

2. Night illumination according to Claim 1, **characterised in that** the light chamber (8) is narrow, only being formed to have the width of the scale (11) with the shift position symbols (12).

3. Night illumination according to Claims 1 and 2, **characterised in that** the surface of the parabolic boundary wall (5) of the light chamber (8) is mirror-coated.

4. Night illumination according to any one of the above-mentioned Claims, **characterised in that** a marking (17), for example an arrow symbol, which indicates the shift position and is visible to the driver of the vehicle, is disposed on the flexible band (9) above the screening chamber (16).

## Revendications

1. Eclairage de nuit pour la commande de changement de vitesse d'un véhicule automobile avec transmission automatique, dans lequel une chambre lumineuse (8) recouverte par une bande souple (9), qui est reliée à un levier de sélection (2), et pouvant être éclairée est prévue sous une échelle de graduation (11) comprenant des symboles de position de sélection translucides et dans lequel la bande souple (9) comprend une fenêtre (15) translucide se trouvant dans les différentes positions de sélection respectivement sous le symbole de position correspondant, **caractérisé en ce qu'**en direction de déplacement du levier de sélection la chambre lumineuse (8) comprend une section parabolique, une surface (7) de la paroi de chambre parabolique réfléchissant la lumière et une source de lumière placée au point focal (6) de la parabole et **en ce qu'**entre la chambre lumineuse (8) et le levier de sélection (2), qui se déplace à côté avec un espacement latéral, est disposée une chambre formant écran (16), dont la partie supérieure est également recouverte par la bande souple (9).

2. Eclairage de nuit selon la revendication 1, **caractérisé en ce que** la chambre lumineuse (8) est étroite en ne dépassant pas la largeur de l'échelle de graduation (11) comprenant les symboles des positions de sélection (12).

3. Eclairage de nuit selon les revendications 1 et 2, **caractérisé en ce que** la surface de la paroi de limitation parabolique (5) de la chambre lumineuse (8) est revêtue de couches réfléchissantes.

4. Eclairage de nuit selon l'une des revendications précédentes, **caractérisé en ce que** sur la bande souple (9) au-dessus de la chambre formant écran (16) est placé un marquage (17), par exemple un symbole en forme de flèche, indiquant la position sélectionnée et qui est visible par le conducteur du véhicule.
